# EUROPEAN PATENT APPLICATION

(11) **EP 1 684 497 A2**
(43) Date of publication of application: **26.07.2006**
(21) Application number: 06100502.1
(22) Date of filing: 18.01.2006
(51) Int. Cl.: H04N 1/387, H04N 1/40, G06T 5/00, G06T 7/00

(54) **Scanning**

(30) Priority: 19.01.2005 KR 2005004988
(71) Applicant: SAMSUNG ELECTRONICS CO., LTD., Suwon-si, Gyeonggi-do (KR)
(72) Inventor: Byun, Hyung-sik 803-1701, Byeokjeokgol Dusan Apt., Suwon-si Gyeonggi-do (KR); Kim, Jeong-rae 432-302, Cheongmyeong-maeul 4danji, Yeongtong-gu Suwon-si Gyeonggi-do (KR)
(74) Representative: Derry, Paul Stefan

(57) **Abstract**

A scanning apparatus includes a scanning unit for scanning documents, an operating panel having a mode input unit for entering an image separation mode that allows plural documents to be scanned together, a position information detection unit for detecting position information of each of the plural documents, and a controller for controlling the scanning unit to scan the plural documents together at least once, controlling the position information detection unit to detect position information of each of the plural documents from scanning data of the plural scanned documents, and controlling the scanning data of the plural scanned documents and the detected position information to be sent to an external operation program. Thus, there is no need for to scan many documents one by one or to manually separate image data for plural documents scanned together using a separate editing tool when the image separation mode is input.

## Description

The present invention relates to scanning. More particularly, the invention relates to apparatus including a scanning unit and to a method comprising scanning.

Generally, office equipment that has a scanning function, for example a flat-bed multi-function machine, has a scanning unit for scanning documents. The scanned documents may then be printed by a printing unit, or the documents may be edited and stored by an external computer using a separate editing tool, such as an image editing program.

Using conventional office equipment to scan a plurality of small documents, such as business cards or post cards, is cumbersome. To scan such documents, a user needs to individually scan the documents, one by one. Alternatively, to avoid individually scanning documents, a plurality of small documents may be scanned at the same time with the scanning unit. The scanned image of the plurality of documents is then separated, by using an editing tool, into a plurality of image files corresponding to the individual documents so that the individual image files may be stored or printed.

While scanning a plurality of documents at the same time involves less work than individually scanning the documents one by one, it still involves manual work in separating the scanned image of the plurality of documents into a plurality of corresponding image files by using the editing tool. That is, the images must be separated manually, one by one. Therefore, the process is cumbersome and can require a lot of time. Furthermore, the image files obtained by this process are typically of poor quality, and the accuracy of image separation is poor.

In accordance with one aspect of the present invention, a scanning apparatus is provided. The scanning apparatus includes a scanning unit, an operating panel, a position information detection unit, and a controller. The scanning unit scans documents. The operating panel has a mode input unit for entering an image separation mode that allows a plurality of documents to be scanned together. The position information detection unit detects position information of each of the plurality of documents. The controller controls the scanning unit to scan the plurality of documents together at least once, and controls the position information detection unit to detect position information of each of the plurality of documents by using the data obtained by scanning the plurality of documents together at least once. The controller also controls the scanning data of the plurality of scanned documents and the detected position information so as to send the data to an external operation program when the image separation mode is input.

The controller may control the scanning unit to scan the plurality of documents twice. The position information detection unit detects position information of each of the plurality of documents using the data obtained from the first scan of the plurality of documents. The controller sends the data obtained from the second scan of the plurality of documents and the detected position information of each of the plurality of documents to the operation program.

The first scan may be conducted at a first resolution, and the second scan may be conducted at a second resolution. The second resolution may be higher than the first resolution.

The mode input unit may include an image separation mode button for selecting the image separation mode, and a selection menu for inputting a selection option displayed on a display of the operating panel after selecting the image separation mode button. The selection menu may include an application program transmitting option for inputting a selection option to transmit a plurality of image files corresponding to the plurality of documents, obtained by the operation program in the image separation mode, to an external application program, and a folder storing option for inputting a selection option to store the plurality of image files into an external folder.

In accordance with another aspect of the present invention, a scanning system includes a computer and office equipment. The computer has a first memory for storing various control programs including office equipment operation programs and various application programs. The office equipment is equipment such as a scanner or a multi-function machine, and includes an operating panel for inputting a selection of a user, a scanning unit for scanning documents, and a second memory for storing scanning data and various control programs. The computer includes a first mode input unit installed in the office equipment operation program, and the first mode input unit is capable of entering an image separation mode to scan a plurality of documents together. The office equipment includes a second mode input unit installed on the operating panel to enter the image separation mode, a position information detection unit for detecting position information of each of the plurality of documents, and a controller. The controller controls the scanning unit to scan the plurality of documents together at least once, and controls the position information detection unit to detect position information of each of the plurality of documents by using the data obtained by scanning the plurality of documents together at least once. The controller also controls the scanning data of the plurality of scanned documents and the detected position information so as to send the data to an external operation program when the image separation mode is input.

The controller may control the scanning unit to scan the plurality of documents twice. The position information detection unit detects position information of each of the plurality of documents using the data obtained from the first scan of the plurality of documents. The controller sends the data obtained from the second scan of the plurality of documents and the detected position information of each of the plurality of documents to the operation program. At this time, the office equipment operation program preferably edits the data obtained from the second scan into a plurality of files respectively corresponding to each of the plurality of documents according to the position information of each of the plurality of documents. The operation program then stores the plurality of edited files in a specific folder or transmits them to a specific application program.

The first scan may be conducted at a first resolution, and the second scan may be conducted at a second resolution. The second resolution may be higher than the first resolution.

The first and second mode input units may respectively include an image separation mode button for selecting the image separation mode, and a selection menu for inputting a selection option respectively displayed on a display of the computer and an LCD (Liquid-Crystal Display) of the operating panel after selecting the image separation mode button. At this time, the selection menu may include an application program transmitting option for inputting a selection option to transmit a plurality of image files corresponding to the plurality of documents, obtained by the office equipment operation program in the image separation mode, to a specific application program of the computer, and a folder storing option for inputting a selection option to store the plurality of image files into a specific folder of the first memory.

In addition, the scanning system of the present invention may further include a printing unit for printing data output from the scanning unit and data transmitted from the computer.

In accordance with another aspect of the invention, a scanning method is provided. The scanning method includes the steps of scanning a plurality of documents together a first time to obtain primary scanning data, detecting position information of each of the plurality of documents from the primary scanning data, transmitting the position information of each of the plurality of documents, scanning the plurality of documents together a second time to obtain secondary scanning data, and transmitting the secondary scanning data.

The first scanning step may include the steps of selecting an image separation mode to scan the plurality of documents together, scanning the plurality of documents together at a first resolution to obtain the primary scanning data, and storing the primary scanning data.

In addition, the position information detection step may include the steps of detecting edges of each image from the primary scanning data, calculating an effective size of each image of the plurality of documents on the basis of the detected edges, and calculating coordinates of start and end points of each document on the basis of the calculated effective size of each document.

The second scanning step may include the step of scanning the plurality of documents together at a second resolution which is higher than the first resolution.

In addition, the scanning method of the present invention may further include editing the secondary scanning data into a plurality of files corresponding to each of the plurality of documents according to the position information of each of the plurality of documents, and storing the plurality of edited files. The plurality of edited files may be stored in a specific folder or may be transmitted to a specific application program.

The apparatus and method can be said to allow easy scanning a plurality of small documents, such as business cards and post cards, into a plurality of image files, without requiring a user to scan the documents several times individually or manually separating images of plural scanned documents into a plurality of corresponding image files one by one.

Accordingly, an aspect of the present invention is to provide a scanning apparatus which makes it possible that, when a plurality of small documents (such as business cards and post cards) are scanned together, the scanned data is automatically separated into a plurality of image files, a scanning system using the scanning apparatus, and a scanning method using the scanning apparatus.

An embodiment of the invention will now be described by way of example only with reference to the accompanying drawings, in which:
Figure 1 is a schematic block diagram showing an embodiment of a scanning system with a scanning apparatus according to the present invention;
Figure 2 is a schematic view illustrating the process of converting scanned data of a plurality of documents scanned by a scanning unit into a plurality of image files corresponding to the plurality of documents respectively, and is useful in understanding the invention;
Figure 3 is a flowchart of an exemplary method according to the invention using the scanning system shown in Figure 1; and
Figure 4 is a flowchart of an exemplary process of performing separating images in the method of Figure 3.

Throughout the drawings, like reference numerals refer to like elements, features, and structures. Descriptions of well-known functions and constructions are omitted for clarity and conciseness.

The scanning system 1 includes a computer 20 such as PC (Personal Computer), and a flat-bed multi-function machine 10. The computer 20 includes a CPU (Central Processing Unit) 21, a monitor 23, and a first memory 26. The CPU 21 controls the overall operation of the computer 20, and the monitor 23 displays various control programs and application programs controlled by the CPU 21. The first memory 26 stores various control programs and application programs (including a multi-function machine operation program 22), data generated by the application programs, and data output from the multi-function machine 10.

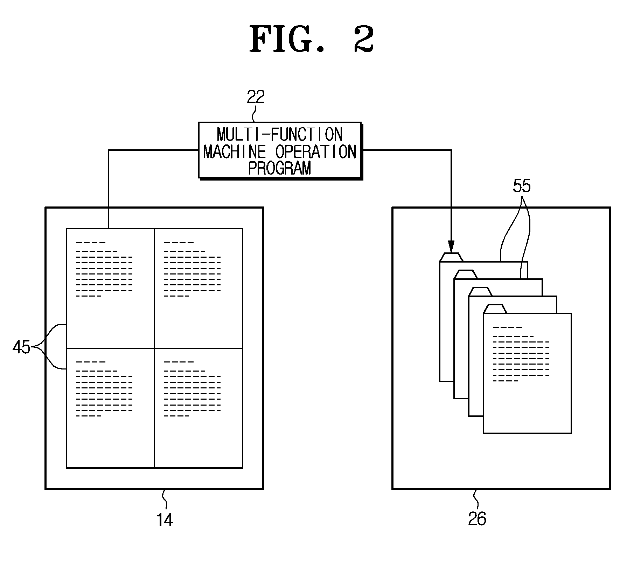

The multi-function machine operation program 22 is a program for controlling the operation of the multi-function machine 10, and includes a first mode input unit 25 that is capable of entering an image separation mode that allows a user to scan a plurality of documents 45 together. The first mode input unit 25 includes a first image separation mode button 27 for selecting the image separation mode, and a first selection window or a first selection menu 28 for inputting a selection option shown on the monitor 23 after pressing the first image separation mode button 27. The first selection menu 28 includes a first application program transmitting option for inputting a selection option to transmit a plurality of image files 55 corresponding to the plurality of documents 45 (see Figure 2) to an external application program, and a first folder storing option for inputting a selection option to store the plurality of image files into an external folder of the first memory 26. The plurality of image files 55 are obtained by editing performed by the multi-function machine operation program 22 in the image separation mode, as described in detail below.

The first application program transmitting option and the first folder storing option of the first selection menu 28 are configured so that the selection is made using a mouse or a keyboard (not shown) of the computer 20 or directly input by a user.

The flat-bed multi-function machine 10 includes an operating panel 13, a printing unit 15, a sensor unit 16, a second memory 12, a modem 17, a PC interface 19, a scanning unit 30 and a controller 11.

The operating panel 13 is used for inputting a selection of a user, and is configured with a key matrix including a plurality of function keys and number keys including a second mode input unit 35 of the scanning unit 30, described later, for setting functions on a menu. The operating panel 13 provides the controller 11 with key data generated by manipulation of the function keys.

An LCD (Liquid Crystal Display) 33 is arranged in the operating panel 13. The LCD receives a control signal from the controller 11 and displays status and various other information regarding the multi-function machine 10.

The printing unit 15 is used for printing data. The printing unit receives data through the PSTN (Public Switched Telephone Network), data scanned by the scanner 14, and data transmitted from the computer 20 by means of the control signal of the controller 11, and then prints the data.

The sensor unit 16 is used for sensing the status of each component according to the operation of the multi-function machine 10, and it senses the status of each component according to the operation of the multi-function machine 10 and then sends a corresponding signal to the controller 11.

The second memory 12 temporarily stores or outputs data received through the PSTN and program data, protocol data, text data and voice data transmitted from the computer 20 under the control of the controller 11, and stores and outputs various control programs required for executing functions of the multi-function machine 10.

The modem 17 receives and outputs data through the PSTN. More specifically, the modem 17 modulates a digital signal received from the controller 11 into an analogue signal and outputs the analogue signal through a LIU (Line Interface Unit) 18 to the PSTN, and demodulates an analogue signal input received from the PSTN through the LIU 18 into a digital signal and sends the digital signal to the controller 11.

The LIU 18 interfaces a signal of the PSTN and the modem 17 under the control of the controller 11, and includes a speech circuit, a dialling circuit and a ring signal detection signal required for basic functions as a phone.

The PC interface 19 sends data to the CPU 21 of the computer 20 or receives information from the CPU 21 of the computer 20. The PC interface 19 sends data received through the PSTN or scanning data from the scanner 14 to the CPU 21 of the computer 20 according to a control signal of the controller 11, or transmits information from the CPU 21 of the computer 20 to the multi-function machine 10 so that the computer 20 and the multi-function machine 10 are connected using IEEE-1284 protocol or the like for mutual communication.

The scanning unit 30 scans documents 45 for storing, editing or copying the documents 45, and then outputs the scanned data to the computer 20 or the printing unit 15.

In addition, when the scanning unit 30 scans a plurality of documents 45 with a size smaller than a scanning range of the scanner 14, (the scanning range may be, for example, A3 size (297mm x 432mm)), such as business cards or post cards, if an image separation mode for scanning a plurality of documents 45 together is selected through the first image separation mode button 27 of the first mode input unit 25 or a second image separation mode button 36 of a second mode input unit 35 (described below), image data obtained by scanning a plurality of documents 45 together is automatically detected together with position information for the plurality of documents 45. The scanned data and information is sent to the multi-function machine operation program 22 of the computer 20 by means of the scanning unit 30. For this purpose, the scanning unit 30 includes a scanner 14, a second mode input unit 35, and a position information detection unit 24.

The scanner 14 is used for scanning documents 45 and is provided with a scanner module (not shown) for scanning the documents 45. If a data transmission mode (that is, facsimile transmission) or a copying mode (that is, a duplicating function) is set through the function keys of the operating panel 13 or the multi-function machine operation program 22 of the computer 20, the scanner 14 scans documents 45 placed on the scanner module upon receipt of a control signal from the controller, then converts the scanning data into image data and sends the data to the controller 11.

The second mode input unit 35 is included in the operating panel 13 of the multi-function machine 10 and allows entering an image separation mode that scans several documents together.

The second mode input unit 35 includes a second image separation mode button 36 for selecting the image separation mode, and a second selection window or a second selection menu (not shown) for inputting a selection option shown on the LCD 33 after pressing the second image separation mode button 36.

The second selection menu includes a second application program transmitting option (not shown) for inputting a selection option to transmit a plurality of image files 55 corresponding to the plurality of documents 45 (obtained by editing performed by the multi-function machine operation program 22 in the image separation mode) to a specific application program, and a second folder storing option (not shown) for inputting a selection option to store the plurality of image files 55 into a specific folder of the first memory 26 of the computer 20.

The second application program transmitting option and the second folder storing option of the second selection menu are configured so that selection is made using input keys such as number keys, arrow keys and other keys of the operating panel 13.

The controller 11 controls the multi-function machine 10 as a whole according to a control program. The controller also controls the image data for the plurality of documents 45 scanned by the scanner 14 and the position information of each of the plurality of documents 45 to be sent to the multi-function machine operation program 22 of the computer 20 when the image separation mode is selected using the first or second image separation mode button 27, 36.

In particular, the controller 11 controls the scanner 14 to scan the plurality of documents 45 at a first resolution, for example at a low resolution for rapid scanning, to obtain primary scanning data, and then stores the primary scanning data in the second memory 12. The controller 11 also controls the position information detection unit 24 to detect position information of each of the plurality of documents 45 from the primary scanning data and then stores the position information in the second memory 12. The controller 11 then controls the scanner 14 to scan the plurality of documents 45 together a second time at a second resolution that is higher than the first resolution (for example, at a resolution set by the multi-function machine operation program 22) to obtain secondary scanning data. The secondary scanning data and the position information of each of the plurality of documents 45 detected by the position information detection unit 24 are transmitted to the multi-function machine operation program 22 of the computer 20.

The position information detection unit 24 detects position information such as the coordinates of start and end points of image data for the plurality of documents 45 and the number of documents 45. This information is detected from the primary scanning data, and the information is stored in the second memory 12. The position information detection unit 24 operates according to a control signal of the controller 11.

The position information detection unit 24 is composed of an image separation circuit or program having an image separation algorithm for separating the image data of the plurality of documents 45 scanned together by the scanner 14 into image data for each of the plurality of documents 45. When the position information detection unit 24 is an image separation program, the image separation program is stored in the second memory 12 and operated by a control signal of the controller 11.

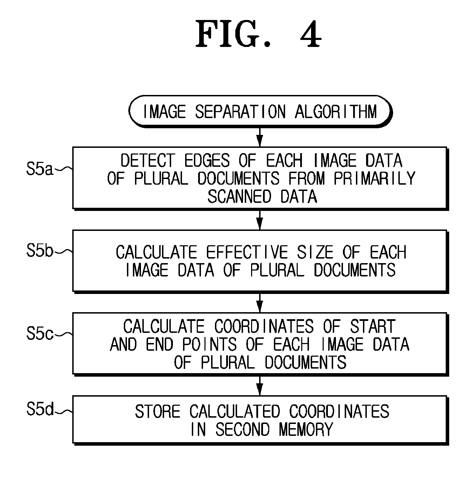

As shown in Figure 4, the image separation algorithm detects the edges of each image of the plurality of documents 45 (S5a) based on the primary scanning data. To do so, the algorithm extracts a portion of the image that is coincident with a preset, standard greyscale (which may be experimentally determined). The algorithm then calculates an effective size of each image of the plurality of documents 45 on the basis of the detected edges of the documents 45 (S5b), calculates the coordinates of the start and end points of each image of the documents 45 on the basis of the effective size of the calculated image data of each document 45 (S5c), and then stores the image to the second memory 12 (S5d).

It should be understood that the described image separation algorithm is merely an exemplary algorithm, and the present invention is not limited to this particular algorithm.

When image data for a plurality of documents 45 is scanned a second time by the scanner 14 and then output to the multi-function machine operation program 22, the multi-function machine operation program 22 edits the secondary scanning data and outputs documents to a plurality of files 55 corresponding to each of the plurality of documents according to the previously detected position information. The plurality of files 55 are then permanently or temporarily stored in the first memory 26. After that, if the image data for the plurality of documents 45 is completely output to the multi-function machine operation program 22 and editing of the plurality of files 55 is completed, the multi-function machine operation program 22 transmits the plurality of edited files 55 to a specific application program or stores them in a specific folder of the first memory according to a selection option input through the first selection menu 28 of the first mode input unit 25 or the second selection menu of the second mode input unit 35.

In the above description, the scanning system 1 is described with respect to a flat-bed multi-function machine 10, although it may instead be applied to different kinds of scanning devices.

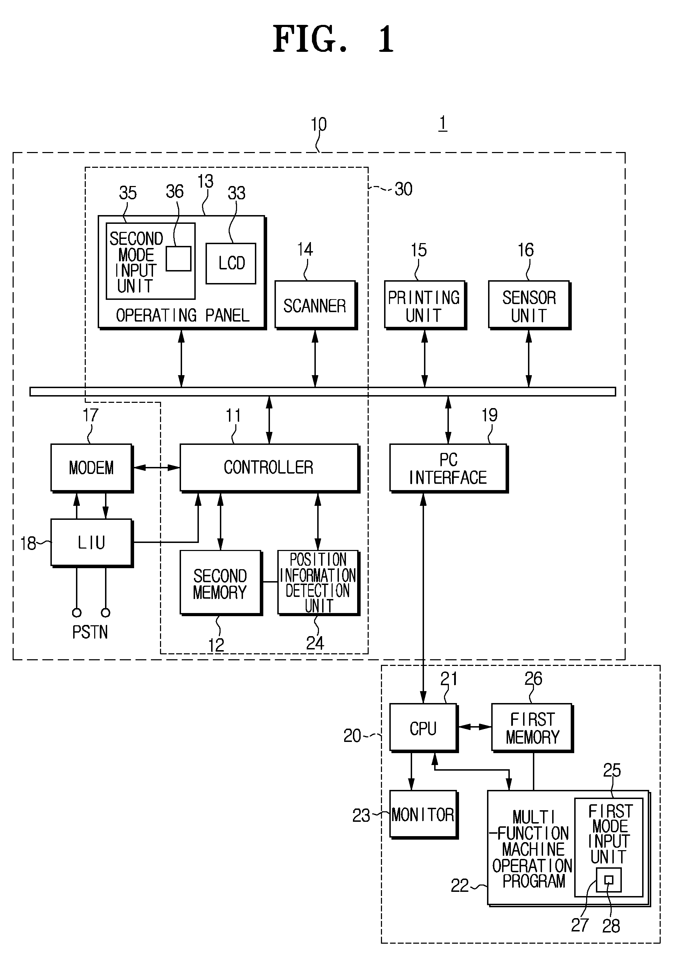

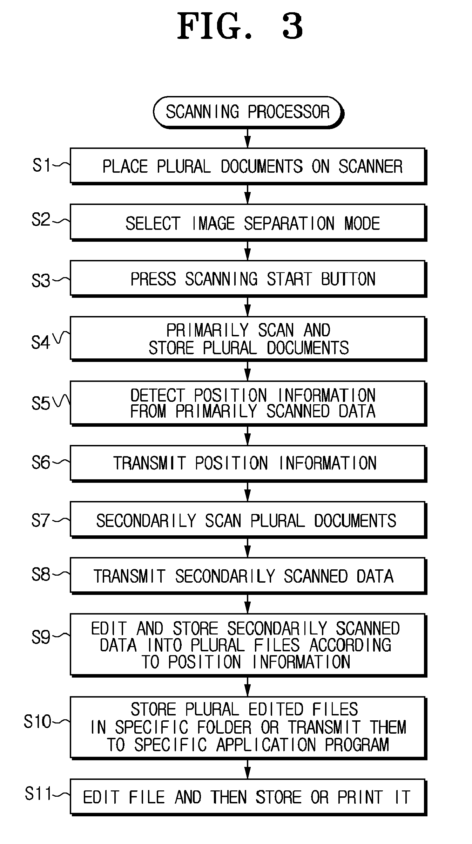

A method of scanning with the above-described scanning system 1 will now be described in detail with reference to Figures 1 to 4, and Figure 3 in particular.

First, as shown in Figure 2, after the multi-function machine 10 and the computer 20 are turned on, a user places a plurality of small documents 45 on the scanner module in the scanner 14 and then closes a cover (not shown) to scan the plurality of documents 45 together (S1).

Subsequently, the user selects the image separation mode by means of any of the first and second image separation mode buttons 27, 36 respectively formed on the multi-function machine operation program 22 of the computer 20 and the operating panel 13 of the multi-function machine 10 (S2).

Here, if the first image separation mode button 27 is pressed, the first application program transmitting option and the first folder storing option are displayed on the first selection menu 28 on the monitor of the computer 20, and the user accordingly selects the first application program transmitting option or the first folder storing option by using a mouse or a keyboard to input a corresponding selection option.

If the second image separation mode button 36 is pressed, the second application program transmitting option and the second folder storing option are displayed as the second selection menu on the LCD 33 of the operating panel 13 of the multi-function machine 10, and the user accordingly selects the second application program transmitting option or the second folder storing option by use of number keys, arrow keys or other input keys formed on the operating panel 13 to input a corresponding selection option.

After the selection option is input as mentioned above, if the user presses a scanning start button (not shown) formed on the operating panel 13 or the multi-function machine operation program 22 of the computer 20 (S3), the controller controls the scanner module of the scanner 14 to scan the plurality of documents 45 at a first, primary resolution, for example, a low resolution, to obtain primary scanning data and the primary scanning data is stored in the second memory 12 (S4).

After that, the controller 11 outputs a control signal to the position information detection unit 24 to operate the position information detection unit 24. Accordingly, the position information detection unit 24 detects position information for the plurality of data regions respectively corresponding to each of the plurality of documents 45 from the primary scanning data stored in the second memory 12 in accordance with the image separation algorithm described above with reference to Figure 4, and then the position information is stored in the second memory 12 (S5).

Subsequently, the controller 11 transmits the position information for the plurality of data regions stored in the second memory 12 to the CPU 21 of the computer 20 through the PC interface 19, and the CPU 21 stores the transmitted position information in the first memory 26 (S6).

After the position information is transmitted to the CPU 21, the controller 11 controls the scanner module of the scanner 14 to scan the plurality of documents 45 a second time at a second resolution (for example in a resolution input by the user through the multi-function machine operation program 22 (S7)) to obtain secondary scanning data. The secondary scanning data is transmitted to the CPU 21 of the computer 20 (S8).

The CPU 21 transmits the secondary scanning data to the multi-function machine operation program 22, and the multi-function machine operation program 22 edits the image data for the plurality of documents 45 into a plurality of files 55 respectively corresponding to each of the plurality of documents 45 in accordance with the position information for the plurality of data regions respectively corresponding to each of the plurality of documents 45 stored in the first memory 26, and then permanently or temporarily stores the image data in the first memory 261 as shown in Figure 2 (S9).

After that, if the secondary scanning for all files 45 is completed and the image data for the plurality of documents 45 is completely output to the multi-function machine operation program 22 to complete editing of the plurality of files 55, the multi-function machine operation program 22 transmits the plurality of edited files 55 to a specific application program or stores them in a specific folder of the first memory 26 according to the selection option input through the first selection menu 28 of the first mode input unit 25 or the second selection menu of the second mode input unit 35 (S10).

Next, a user executes the application program to edit the plurality of files 55 stored in the specific folder and then store the edited data in the first memory 26 or print them with the printing unit 15, or to edit the plurality of files 55 transmitted to the specific application program and then store the edited data in the first memory 26 or print them with the printing unit 15 as necessary (S11).

As described above, a scanning apparatus according to an exemplary embodiment of the present invention, a scanning system having the apparatus, and a scanning method using the apparatus make it possible to scan a plurality of small documents together and automatically separate the data into a plurality of files. This relieves the difficulty associated with and the time required for individually scanning the plurality of documents one by one or manually separating the image data for the plurality of documents scanned together using a separate editing tool. In addition, the scanning apparatus of the present invention improves the quality of the scanned image and the accuracy of image separation.

While the invention has been shown and described with reference to certain embodiments thereof, it will be understood by those skilled in the art that various changes in form and details may be made therein without departing from the scope of the invention as defined by the appended claims.

## Claims

1. Apparatus (10) comprising:
a scanning unit (14);
an input panel (13) for allowing a user to select an image separation mode;
a position information detection unit (24); and
a controller (11) for controlling the scanning unit (14) to scan the plurality of documents together to produce scanning data; for controlling the position information detection unit (24) to detect position information of each of the plurality of documents from the scanning data, and for controlling the scanning data and the position information to be sent to an external operation program (22) when the apparatus is in the image separation mode.

2. Apparatus according to claim 1, wherein
the controller (11) is arranged to control the scanning unit (14) to scan the plurality of documents twice to obtain first and second scanning data respectively, to control the position information detection unit to detect position information of each of the plurality of documents from the first scanning data, and to send the second scanning data and the detected position information to the external operation program.

3. Apparatus according to claim 2, wherein the second scanning data is at a higher resolution than first scanning data.

4. Apparatus according to any preceding claim, wherein the input panel (13) includes:
an image separation mode button (35) for selecting the image separation mode; and
a selection menu (36) for inputting a selection option displayed on a display of the operating panel after selecting the image separation mode button.

5. Apparatus according to claim 4, wherein the selection menu includes:
an application program transmitting option for allowing a user to select an option to transmit a plurality of image files corresponding to the plurality of documents, obtained by the operation program in the image separation mode, to an external application program; and
a folder storing option for allowing a user to select an option to store the plurality of image files in an external folder.

6. A scanning system comprising apparatus according to any preceding claim and a computer (20),
wherein the computer has stored thereon the external; operation program and wherein the computer includes an input (25) for allowing a user to select that the apparatus enters an image separation mode, and for sending a suitable signal to the apparatus when the image separation mode is selected at the computer.

7. A method comprising:
scanning a plurality of documents together a first time to obtain first scanning data;
detecting position information of each of the plurality of documents from the primary scanning data;
scanning the plurality of documents together a second time to obtain secondary scanning data; and
transmitting the position information and the second scanning data.

8. A method according to claim 7, wherein first scanning data is at a lower resolution than the second scanning data.

9. A method according to claim 7 or claim 8, wherein the position information detection step includes:
detecting edges of each image data for the plurality of documents from the first scanning data;
calculating an effective size of each image of the plurality of documents on the basis of the detected edges; and
calculating coordinates of start and end points of each document on the basis of the calculated effective size of each document.

10. A method according to claim 9, further comprising the step of:
editing the second scanning data into a plurality of files corresponding to each of the plurality of documents according to the position information of each of the plurality of documents.

11. A method according to claim 10, further comprising storing the plurality of edited files in a folder.

12. A method according to claim 10, further comprising transmitting the plurality of edited files to an application program.
